# FASCICULE DE BREVET EUROPEEN

(11) **EP 1 062 518 B1**
(45) Date de publication et mention de la délivrance du brevet: **12.06.2002**
(21) Numéro de dépôt: 99909048.3
(22) Date de dépôt: 19.03.1999
(51) Int. Cl.: G01N 35/10, B01L 3/02, B81B 3/00

(54) **DISPOSITIF AUTOMATIQUE DE REALISATION D'ECHANTILLONS EN VUE DE LA MISE EN OEUVRE DE REACTIONS CHIMIQUES OU BIOLOGIQUES EN MILIEU LIQUIDE**
AUTOMATISCHES GERÄT ZUR ERZEUGUNG VON PROBEN ZUR DURCHFÜHRUNG CHEMISCHER ODER BIOLOGISCHER REAKTIONEN IM FLÜSSIGEN MILIEU
AUTOMATIC DEVICE FOR PRODUCING SAMPLES FOR USE IN CHEMICAL OR BIOLOGICAL REACTIONS IN LIQUID MEDIUM

(30) Priorité: 20.03.1998 FR 9803446
(43) Date de publication de la demande: 27.12.2000
(73) Titulaire: Fondation Jean Dausset-Ceph, 75010 Paris (FR)
(72) Inventeur: COHEN, Patrick, F-95170 Deuil la Barre (FR); THOMAS, Gilles, F-75005 Paris (FR); VICTOR, Jean-Marc, F-75009 Paris (FR)
(74) Mandataire: Warcoin, Jacques
(86) Numéro de dépôt international: FR9900640
(87) Numéro de publication internationale: WO9949320

(56) Documents cités:
- EP-A- 0 438 136
- EP-A- 0 810 438
- WO-A-97/26539
- WO-A-97/44134
- US-A- 5 338 688

## Description

La présente invention concerne un dispositif automatique de réalisation d'une pluralité d'échantillons réactionnels à partir de plusieurs composants pour la mise en oeuvre de réactions chimiques ou biologiques en milieu liquide, notamment le dosage d'au moins un composant particulier dans un prélèvement biologique.

De nombreuses méthodes ont été développées pour l'identification, la détection ou la quantification d'analytes dans des composants chimiques ou biologiques.

Ces méthodes sont basées le plus souvent sur la formation de complexes par réaction d'affinité entre membres d'une paire de liaison spécifique.

Des réactions, de type ligand/récepteur, résultent par exemple d'interactions entre un antigène et un anticorps spécifique, d'une hybridation entre deux séquences d'acides nucléiques complémentaires ou d'un phénomène de reconnaissance entre le site de liaison d'une protéine, par exemple une enzyme, hormone, ou autre entité biologique, et son ligand, substrat ou récepteur.

La formation d'un complexe d'affinité permet de mettre en évidence la présence de l'analyte recherché dans l'échantillon. Cet analyte peut éventuellement être quantifié, s'il est possible de séparer les formes complexées de celles restées à l'état libre, ou de mesurer le taux d'occupation des ligands spécifiques de l'analyte.

Ce type de méthode de détection et quantification d'un analyte présent dans un composant, parfois à l'état de trace, offre un grand intérêt pour les laboratoires de recherche ou d'analyse, notamment les laboratoires d'analyse clinique ou biologique.

Toutefois, pour une utilisation en routine, les méthodes doivent pouvoir être appliquées simultanément sur un grand nombre de composants. En outre, pour un même composant, il est souvent nécessaire de réaliser plusieurs tests afin de mettre en évidence la formation de différents complexes, de doser plusieurs analytes de ce composant.

Par ailleurs, dans le domaine de l'analyse génétique, la technique de l'amplification génique nommée « Polymérase Chain Reaction » (PCR) permet notamment à partir de prélèvements d'ADN d'identifier des séquences d'ADN marqueurs de maladies génétiques, d'identifier et d'isoler des séquences d'ADN en vue d'un clonage ou encore de doser quantitativement des séquences d'ADN particuliers.

Cette technique permet d'amplifier dans un échantillon une séquence d'ADN particulière en vue de l'analyser.

Les échantillons réactionnels mis en oeuvre dans cette technique PCR, sont constitués de trois composants différents : le prélèvement biologique contenant l'ADN, les amorces (oligonucléotides) spécifiques de la séquence à analyser et le mix PCR comprenant la polymérase et les nucléotides.

La mise en oeuvre d'une telle technique sur un grand nombre de prélèvements d'ADN différents, nécessite alors la mise en oeuvre d'un grand nombre d'échantillons réactionnels réalisés à partir du croisement d'au moins deux séries de nombreux composants.

Plus généralement, la caractérisation d'un grand nombre de propriétés chimiques ou biologiques sur un large panel de composants différents nécessite la réalisation d'un grand nombre d'échantillons à partir d'au moins deux séries de nombreux composants différents.

Afin d'abaisser les coûts de mise en oeuvre de telles techniques de caractérisation, on est conduit actuellement à réduire autant que possible le volume des composants utilisés.

En particulier, dans le domaine de l'analyse génétique, la tendance actue est de réduire d'un facteur 1000 les volumes de composants manipulés qui passent alors de quelques microlitres à quelques nanolitres.

Ainsi, actuellement, se développe la technologie des puces ADN (« microchips ») qui permet de réaliser sur un support d'échantillons miniaturisé, des réactions simultanées d'un grand nombre de réactifs avec un même prélèvement biologique.

Toutefois, une telle technologie ne permet pas la réalisation automatique d'un grand nombre d'échantillons réactionnels à partir d'au moins deux séries de composants différents.

Par rapport à l'état de la technique, la présente invention propose un nouveau dispositif automatique permettant de réaliser la distribution contrôlée de nanovolumes de composants liquides dans une plaque contenant un grand nombre de cavités miniaturisées afin d'effectuer de multiples mélanges en nanovolumes pour réaliser des échantillons réactionnels.

Plus particulièrement, selon l'invention, il est prévu un dispositif automatique de réalisation d'une pluralité d'échantillons réactionnels à partir de plusieurs composants pour la mise en oeuvre de réactions chimiques ou biologiques en milieu liquide, notamment le dosage d'au moins un composant ou d'un analyte particulier dans un prélèvement biologique, un tel dispositif comportant :
- une première plaque d'alimentation, notamment une plaque amovible du type microplaque, comportant N réceptacles destinés chacun à contenir un composant,
- une deuxième plaque d'alimentation, notamment une plaque amovible du type microplaque, comportant M réceptacles destinés chacun à contenir un composant,
- une plaque d'échantillons amovible, comprenant une pluralité de cavités agencées sous la forme d'une matrice comportant au moins N lignes et au moins M colonnes, chaque cavité présentant un volume de l'ordre de quelques dizaines de nanolitres, et étant destinée à contenir un mélange de composants provenant des première et deuxième plaques d'alimentation,
- une micropipette piezoéfectrique apte à prélever une quantité déterminée de composants et à délivrer des gouttes de volume de l'ordre du nanolitre,
- des moyens pour déplacer la micropipette piezoélectrique selon au moins deux axes Y, Z perpendiculaires de sorte qu'elle puisse venir prélever dans chaque réceptacle rempli des première et deuxième plaques d'alimentation, la quantité déterminée d'un composant, et
- des moyens de déplacement relatif de la micropipette piezoélectrique et de la plaque d'échantillons, associés à des moyens de déclenchement de tire de la micropipette de manière que cette demière délivre au moins une goutte de composant dans chaque cavité de la plaque d'échantillons.

On entend par N réceptacles, et M réceptacles des première et deuxième plaques d'alimentation, les réceptacles destinés à être effectivement remplis avec un composant. Il est bien entendu alors que ces première et deuxième plaques d'alimentation peuvent contenir un nombre de réceptacles supérieur à N respectivement à M, avec un certain nombre de réceptacles utiles non utilisés.

Ainsi, grâce à la combinaison des moyens précités du dispositif selon l'invention, on peut réaliser des milliers d'échantillons différents à l'heure dans des volumes de quelques nanolitres en vue d'effectuer des réactions chimiques ou biologiques.

Grâce à la miniaturisation des volumes d'échantillons on réduit ainsi le coût desdites réactions chimiques ou biologiques.

L'automatisation du dispositif outre le fait qu'elle permet d'obtenir une cadence élevée de production de plaques d'échantillons, elle permet de respecter de ponnes conditions de sécurité et d'hygiène.

Selon d'autres caractéristiques avantageuses et non limitatives du dispositif selon l'invention :
- Le déplacement relatif de la micropipette piezoélectrique et de la plaque d'échantillons, est continu et les moyens de déclenchement de tir sont aptes à déclencher des tirs de la micropipette à intervalles de temps réguliers en fonction de la vitesse constante de déplacement relatif de ladite micropipette et de la plaque d'échantillons, indépendamment de la présence ou non d'une cavité de la plaque d'échantillons au droit de la micropipette.
- Les moyens de déplacement relatif, sont des moyens d'avancement de la plaque d'échantillons selon un axe X parallèle aux lignes de la matrice des cavités et/ou selon un axe Y parallèle aux colonnes de la matrice des cavités, la micropipette piezoélectrique restant fixe au-dessus de la plaque d'échantillons pendant le remplissage desdites cavités.
- Les moyens de déplacement relatif sont des moyens d'avancement de la micropipette selon des axes X et/ou Y parallèles respectivement aux lignes et aux colonnes de la matrice de cavités de la plaque d'échantillons qui reste fixe en dessous de la micropipette pendant le remplissage desdites cavités.
- Les moyens d'avancement comprennent un moteur pas à pas ou à courant continu, et les moyens de déclenchement de tir comprennent un compteur des pas du moteur apte à envoyer un signal de déclenchement de tir tous les N₁ pas.
- La micropipette piezoélectrique est apte à compter le nombre de gouttes qu'elle délivre et à s'arrêter de tirer au bout d'un nombre déterminé de gouttes délivrées.
- Le dispositif comporte un plateau réfrigérant supportant la plaque d'échantillons.
- Il est prévu au moins un système optique, tel que l'émission/réception d'une nappe laser, au droit de la plaque d'échantillons, apte à compter le nombre de gouttes délivrées à chaque tir de la micropipette piezoélectrique, et à transmettre ce nombre à un dispositif de coordination pour qu'un ordre de second passage au droit d'une ou plusieurs cavité(s) soit envoyé à la micropipette lors d'un écart constaté entre le nombre de gouttes tirées comptabilisé et le nombre de gouttes théorique prévu.
- Le dispositif comporte un autre micropipette piezoélectrique identique à la première, les deux micropipettes fonctionnant en altemance.
- Le dispositif comporte une station automatique de lavage associée à chaque micropipette piezoélectrique assurant la décontamination de celle-ci.
- Chaque station de lavage comporte des moyens de remplissage de la micropipette piezoélectrique avec un liquide transporteur et des moyens optiques de vérification du bon remplissage de ladite micropipette.
- Chaque micropipette piezoélectrique comporte deux parties conductrices séparées par un matériau non conducteur, électriquement reliées en partie supérieure à un système électrique, de sorte que lorsque l'orifice de la micropipette piezoéfectrique entre en contact avec un composant d'un réceptacle de la première ou de la deuxième plaque d'alimentation, il se produit une fermeture du circuit électrique formé par les deux parties conductrices reliées électriquement de ladite micropipette, qui commande l'arrêt du déplacement vertical de la micropipette.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en plan d'un mode de réalisation du dispositif automatique selon l'invention,
- la figure 2 est une vue partielle en coupe transversale de la plaque d'échantillons du dispositif automatique selon l'invention, et
- la figure 3 est une vue schématique de détail de la figure 2.

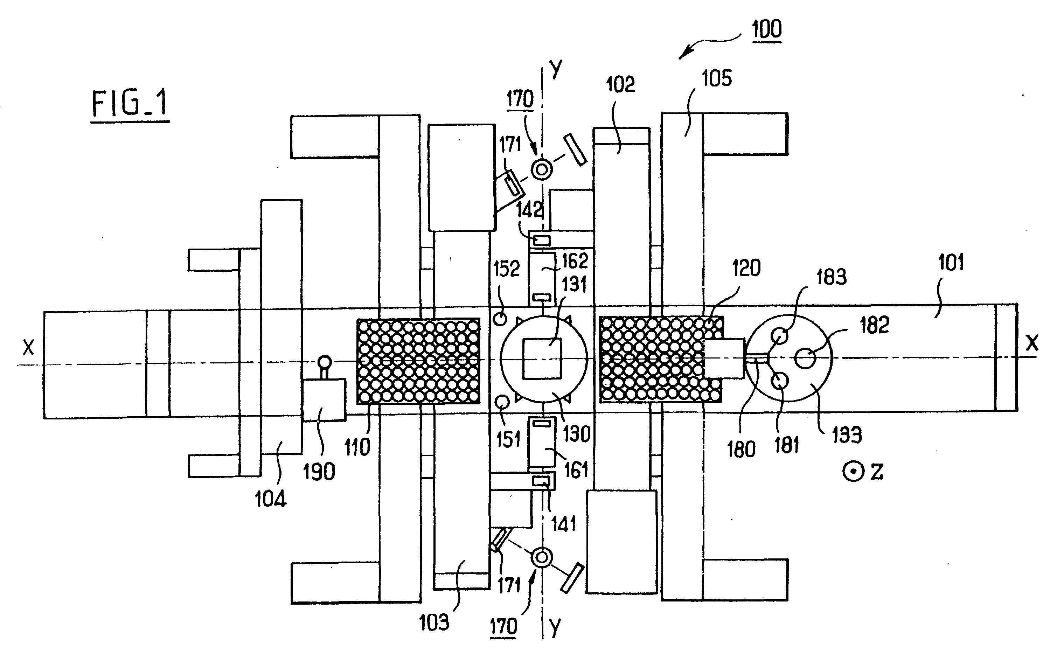

Sur la figure 1, on a représenté un dispositif automatique 100 de réalisation d'une pluralité d'échantillons à partir de plusieurs composants pour la mise en oeuvre de réactions chimiques ou biologiques en milieu liquide, ici en particulier la technique d'amplification génique (technique PCR).

Ce dispositif 100 comporte une première plaque d'alimentation 110, ici une plaque amovible du type microplaque qui comporte 96 puits ou cavités d'une capacité de l'ordre de 100 à 300 microlitres, destinés chacun à contenir un composant, ici un prélèvement d'ADN.

Avantageusement, chaque réceptacle contient un composant différent.

Il comporte en outre une deuxième plaque d'alimentation 120, ici identique à la première plaque, c'est-à-dire une plaque amovible du type microplaque comportant 96 puits ou cavités, destinés chacun à contenir un composant. Dans le cas particulier décrit, les composants placés dans les cavités de la deuxième plaque d'alimentation 120, sont des amorces qui peuvent être fluorescentes, constituées par des oligonucléotides spécifiques des séquences d'ADN particulières à amplifier.

Il est également avantageux que chaque réceptacle de la deuxième plaque d'alimentation 120 contienne un composant différent.

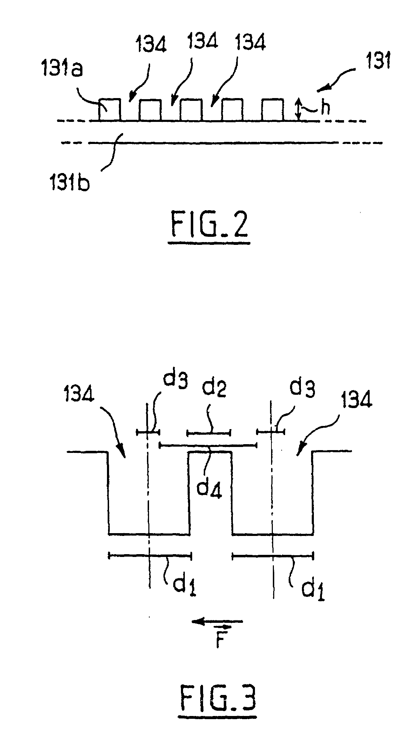

Il est prévu une plaque d'échantillons 130 amovible, qui comprend une pluralité de cavités 134 (voir figure 2) agencées sous la forme d'une matrice 131, ici une matrice carrée qui comporte 100 lignes et 100 colonnes par exemple.

Chaque cavité 134 de la plaque d'échantillons 130 présente un volume de l'ordre de quelques dizaines de nanolitres, ici de l'ordre de 60 nanolitres, et est destinée à contenir un mélange de composants provenant des première et deuxième plaques d'alimentation 110, 120.

Plus particulièrement, la matrice 131 de la plaque d'échantillons 130 présente ici une longueur et une largeur d'environ 5,5 cm, les cavités 134 sont espacées successivement en ligne d'une longueur d₂ de l'ordre de 150 µm (voir figure 3). Elles présentent une largeur d₁ d'environ 400 µm pour une profondeur h (voir figure 2) de l'ordre de 400-500 µm.

La plaque d'échantillons 130 est constituée d'une tranche support en verre 131b, transparente aux rayons UV, sur laquelle est collée chimiquement («chemical bonding » ou « anodic bonding ») une grille de silicium 131a dont les trous correspondent aux cavités 134 de la plaque d'échantillons. Cette grille de silicium 131a est réalisée à partir d'une tranche de silicium (« Wafer ») masquée et percée par photolithogravure.

La première plaque d'alimentation 110 et la deuxième plaque d'alimentation 120 sont disposées de part et d'autre de la plaque d'échantillons 130 selon un axe X, sur un banc 101.

Comme cela sera décrit plus en détail ultérieurement, ce banc 101 est ici apte à se déplacer en translation selon l'axe X.

Il est intéressant de noter que selon une caractéristique avantageuse du dispositif 100, la plaque d'échantillons 130 est disposée sur un support réfrigérant non représenté, de sorte que la quantité faible de produit qui arrive dans chacune des cavités de la matrice 131 de la plaque d'échantillons 132, soit refroidie et éventuellement congelée.

On limite ainsi l'évaporation du produit placé dans chacune des cavités de la plaque d'échantillons.

Selon l'exemple représenté, il est prévu à proximité de la plaque d'échantillons 130 sur le banc 101, deux récipients 151, 152 disposés symétriquement de part et d'autre de l'axe X du banc 101 et destinés à contenir chacun un autre composant, ici le mélange mix PCR qui contient une polymérase et les nucléotides. Ces récipients 151, 152 sont aptes à contenir 100 à 500 microlitres de produit.

Le dispositif 100 comporte une première micropipette piezoélectrique 141 apte à prélever une quantité déterminée de composant et à délivrer des gouttes de composant d'un volume de l'ordre du nanolitre.

La quantité prélevée par la micropipette piezoéiectrique 141 est de l'ordre du microlitre. Bien entendu, on peut prévoir qu'elle prélève plusieurs microlitres.

Cette micropipette 141 est montée sur un bâti 103 motorisé du dispositif 100 de manière à pouvoir se déplacer selon un axe Y transversal à l'axe X situé dans le même plan que celui-ci, et selon un axe Z perpendiculaire aux axes X et Y de sorte qu'elle puisse venir prélever dans chaque réceptacle rempli des première et deuxième plaques d'alimentation 110, 120, la quantité déterminée d'un composant, comme cela sera décrit ultérieurement.

De manière générale, il peut être prévu dans le dispositif 100 selon l'invention, des moyens à moteur pour déplacer la micropipette piezoélectrique 141 selon les axes X, Y, Z perpendiculaires.

Dans l'exemple représenté, il est également prévu une deuxième micropipette piezoélectrique 142 identique à la première micropipette piezoélectrique 141 disposée symétriquement à la première par rapport à l'axe X de telle sorte que les orifices des micropipettes soient parfaitement alignés, sur un même axe Y.

La deuxième micropipette piezoéiectrique 142 est montée sur un bâti 102 motorisé de manière à pouvoir se déplacer selon les axes Y et Z perpendiculaires. Ici aussi, on peut prévoir qu'elle soit déplaçable selon l'axe X dans une variante de réalisation non représentée.

Les deux micropipettes piezoélectriques 141, 142 sont aptes à fonctionner en alternance pour remplir les cavités disposées en lignes et en colonnes de la matrice 131 de la plaque d'échantillons 130.

II est prévu des moyens de déplacement relatif de chaque micropipette piezoélectrique 141, 142 et de la plaque d'échantillons 130, associés à des moyens de déclenchement de tir de chaque micropipette 141, 142 de manière que cette dernière délivre au moins une goutte de composant dans chaque cavité 134 de la plaque d'échantillons 130.

Ici, avantageusement, le déplacement relatif de la micropipette piezoélectrique 141, 142 et de la plaque d'échantillons 130, est continu et les moyens de déclenchement de tir sont aptes à déclencher les tirs de la micropipette piezoélectrique correspondante 141, 142 à intervalles de temps réguliers en fonction de la vitesse constante de déplacement relatif de la micropipette 141, 142 et de la plaque d'échantillons 130, indépendamment de la présence ou non d'une cavité 134 de la plaque d'échantillons 130 au droit de la micropipette 141, 142.

Pour cela, il est prévu pour remplir les cavités en lignes de la matrice 131 de la plaque d'échantillons 130, selon le mode de réalisation représenté sur la figure 1, que le moyen de déplacement relatif comporte des moyens d'avancement de la plaque d'échantillons 130 selon l'axe X parallèle aux lignes de la matrice 131 de cavités 134, la micropipette piezoélectrique correspondante 141, 142 restant fixe au-dessus de la plaque d'échantillons 130 lors du remplissage des cavités de cette dernière.

Lesdits moyens d'avancement comportent un moteur pas à pas ou à courant continu et les moyens de déclenchement de tir comprennent un compteur de pas du moteur apte à envoyer un signal électrique externe de déclenchement du tir tous les N₁ pas.

Plus particulièrement, selon l'exemple représenté, chaque micropipette piezoélectrique 141, 142 présente avantageusement une fréquence d'éjection de 1000 hertz ce qui lui permet de délivrer 10 gouttes de 1 nanolitre en 10⁻² seconde.

Il est intéressant de souligner que la fréquence d'éjection de la micropipette piézoélectrique ne doit pas être trop élevée pour éviter tout risque de désamorçage (par cavitation) de cette dernière.

La fréquence d'éjection est alors choisie de manière optimale pour qu'elle soit suffisamment élevée tout en évitant les risques de désamorçage de la micropipette en cours d'action.

Dans le cas typique, il est prévu qu'à chaque passage de la pipette piezoélectrique au-dessus d'une cavité, celle-ci délivre 10 gouttes de composant de 1 nanolitre dans la cavité correspondante 134 de la matrice 131 de la plaque d'échantillons 130.

Pour ce faire, la micropipette piezoélectrique 141, 142 effectue un tir de 10 gouttes sur une distance d₃ de 100 µm au voisinage de chaque axe central de chaque cavité 134, comme cela est représenté plus particulièrement sur la figure 3.

La pipette piezoélectrique délivre alors 10 gouttes de 1 nanolitre en 10⁻² seconde sur une distance de 100 µm au voisinage de chaque centre de chaque cavité 134 de la matrice 131 de plaque d'échantillons, ce qui permet de déterminer la vitesse continue d'avancement de 10 mm/s de la matrice 131 de la plaque d'échantillons par rapport à la pipette piezoélectrique fixe.

Avantageusement, chaque micropipette piezoélectrique 141, 142 est telle qu'elle est apte à compter le nombre de gouttes qu'elle délivre et à s'arrêter au bout d'un nombre de gouttes déterminé, fixé au préalable.

Dans le cas présent, elle s'arrête alors au bout de 10 gouttes de composant délivrées.

Le moteur pas à pas ou à courant continu non représenté sur la figure permet de faire défiler en continu le banc 101 sur lequel se trouve la plaque d'échantillons, par exemple selon la flèche F comme représentée sur la figure 3 à une vitesse constante de 10 mm/s. Ce moteur compte ses pas et au bout d'un certain nombre de pas N₁ correspondant à la distance parcourue d₁ + d₂, il envoie un ordre (par un signal électrique externe) à la micropipette piezoélectrique considérée 141, 142, de déclenchement de tir des 10 gouttes de composant, alors que celle-ci se trouve en principe à proximité d'un centre d'une cavité 134. Le tir de la micropipette se déroule sur une distance d₃ égale à 100 µm au bout de laquelle la micropipette qui a en principe compté 10 gouttes de composant, s'arrête de délivrer le composant du produit.

Le moteur pas à pas ou à courant continu qui continue à compter ses pas, fait avancer la plaque d'échantillons d'une distance d₄ égale à environ 500 µm avant d'envoyer un nouvel ordre de déclenchement de tir à la micropipette piezoélectrique, celle-ci se trouvant normalement à proximité du centre de la cavité 134 suivante sur une même ligne, et ainsi de suite.

Il est à noter que ces moyens de déclenchement de tir sont indépendants du fait qu'une cavité de la plaque d'échantillons se trouve au droit de l'orifice de la micropipette piezoélectrique, mais sont dépendants de la vitesse d'avancement relatif de la plaque d'échantillons et de la micropipette, de sorte que lorsque la micropipette déclenche un tir son orifice se trouve à proximité d'un centre d'une cavité.

Bien entendu, selon une variante non représentée, il peut être prévu pour remplir les cavités en lignes de la matrice d'échantillons des moyens de déplacement de la micropipette par rapport à la plaque d'échantillons, cette dernière restant fixe.

Ces moyens de déplacement de la micropipette peuvent être un moteur pas à pas ou à courant continu qui compte ses pas et qui déclenche le tir de la micropipette au passage de l'extrémité de cette dernière au voisinage d'un centre d'une cavité de la plaque d'échantillons comme cela a été décrit précédemment.

Un tel moyen de déplacement de la micropipette selon l'axe Y parallèle aux colonnes de la matrice de la plaque d'échantillons, est utilisé selon l'exemple décrit pour remplir les cavités selon les colonnes de la matrice.

Le dispositif 100 comporte de part et d'autre de la plaque d'échantillons 130 disposée sur le banc 101, des moyens de contrôle du nombre de gouttes délivrées dans chaque cavité, ici un système d'émission/réception d'une nappe laser 161, 162 dont le faisceau est aligné sur l'axe de déplacement des micropipettes.

Le système d'émission/réception de la nappe laser 161, 162 est apte à comptabiliser et à transmettre le nombre de gouttes délivrées dans chaque cavité par la micropipette piezoélectrique, à un dispositif de coordination, une comparaison entre le nombre délivré et le nombre théorique prévu (ici le nombre 10) est effectué par le dispositif de coordination et lors d'un écart constaté entre le nombre réellement délivré et le nombre théorique prévu, le dispositif de coordination envoie un ordre de second passage de la micropipette piezoélectrique au-dessus de la ou les cavité(s) concernée(s) de manière à délivrer la ou les goutte(s) manquante(s). Si l'écart constaté est supérieur à un seuil donné, le système est apte à enregistrer cet écart dans un fichier informatique.

Comme le montre la figure 1, il est prévu dans le dispositif 100 pour chaque micropipette piézoélectrique 141, 142 une station automatique de lavage 170. Chaque micropipette ayant sa propre station de lavage au plus proche de la pipette concernée. Ces deux stations de lavage 170 sont disposées symétriquement par rapport à l'axe X de part et d'autre du banc 101 alignées sur l'axe de déplacement des micropipettes.

Chaque station automatique de lavage 170 est telle qu'elle permet entre chaque ligne ou colonne remplie de la matrice, de laver la micropipette avec de l'eau de javel par exemple, de façon à la décontaminer, et de la remplir avec un liquide transporteur non mixible à l'eau, par exemple de l'octane. Avantageusement, il est prévu à chaque station de lavage 170, un moyen optique, tel qu'un faisceau laser 171 qui permet de contrôler le bon remplissage de la micropipette avec le liquide transporteur.

En outre, le dispositif 100 comporte un système automatique de dépose et de pose de couvercles 180 fixé sur un bâti 105 motorisé au-dessus du banc 101, à l'extérieur de la deuxième plaque d'alimentation 120 (par rapport à la plaque d'échantillons). Ce système de dépose et de pose 180 de couvercles comporte ici trois ventouses 181, 182, 183 disposées à l'extrémité de bras s'étendant radialement à partir d'un point central, et est apte à se déplacer selon l'axe Z pour venir attraper un couvercle par exemple un couvercle 133 de la plaque d'échantillons, réalisé en verre transparent aux rayons UV, et lorsque la plaque d'échantillons 130 est placée en dessous dudit système 180, à déposer ce couvercle 133 sur la plaque d'échantillons 130 remplie pour la fermer. Le système de dépose et de pose 180 de couvercles est destiné également à enlever les couvercles non représentés des première et deuxième plaques d'alimentation avant la mise en route du processus de remplissage de la matrice de la plaque d'échantillons.

A l'opposée du système automatique de dépose et de pose 180 de couvercles, il est prévu un système automatique de pose de joint 190 sur la plaque d'échantillons 130 avant de mettre en place le couvercle. Ce système 190 est monté sur un bâti 104 au-dessus du banc 101 et est motorisé de manière à se déplacer selon les axes Z et Y de sorte que, lorsque la plaque d'échantillons 130 se présente en dessous de ce système 190, en avançant selon l'axe X, le déplacement selon l'axe Y du système de pose de joint 190 permet de placer un joint circulaire sur la plaque d'échantillons 130. Dans le cas où la latitude de déplacement du banc 101 est limité selon l'axe X, il peut être prévu au niveau du système automatique de pose de joint 190, un autre système de dépose et de pose de couvercle identique à celui décrit précédemment et destiné à enlever et à remettre le couvercle de plaque d'alimentation 110 située à proximité de celui-ci.

Selon une caractéristique particulièrement avantageuse, chaque pipette piezoélectrique 141, 142 du dispositif selon l'invention, comporte deux parties conductrices séparées par un matériau non conducteur, reliées à un système électrique, de sorte que lorsque l'orifice de la micropipette entre en contact avec un composant d'un réceptacle de la première ou la deuxième plaque d'alimentation, il se produit une fermeture du circuit électrique, qui provoque l'arrêt de celle-ci au voisinage de la surface du liquide.

La micropipette comporte ainsi un système détecteur de niveau de manière à ce qu'elle ne s'enfonce pas de manière excessive dans chaque réceptacle de chaque plaque d'alimentation.

Le fonctionnement du dispositif 100 représenté sur la figure 1 est le suivant.

Tout d'abord, le banc 101 se déplace selon l'axe X pour amener la plaque d'alimentation 110 en dessous d'un système de dépose et pose de couvercle 180, de sorte que ce dernier enlève le couvercle de cette plaque, qui reste suspendu par les ventouses au-dessus du banc.

En partant de la position au repos représentée sur la figure 1 dans laquelle on considère que chacune des micropipettes 141, 142 est remplie correctement avec un liquide transporteur, la première micropipette 141 se déplace selon l'axe Y pour venir au-dessus du banc 101 et la première plaque d'alimentation 110 se déplace selon l'axe X sur le banc 101 pour que l'orifice de la micropipette se trouve au droit du premier réceptacle par exemple.

La première micropipette descend selon l'axe Z pour prélever une dose d'environ 1 microlitre du composant se trouvant dans le réceptacle, puis remonte se positionner juste au-dessus de la plaque d'alimentation 110. On vérifie alors le bon amorçage de la micropipette en redistribuant dans le réceptacle quelques gouttes du composant.

La plaque d'échantillons 130 vient alors se positionner en dessous de la micropipette de sorte que son orifice soit placé au droit de la première cavité de la première ligne de la matrice 131 de la plaque d'échantillons 130.

Puis le moteur pas à pas ou à courant continu déplace le banc 101 pour faire avancer en continu la matrice 131 de la plaque d'échantillons selon l'axe X à la vitesse de 10 mm/s (comme décrit précédemment) la micropipette effectuant à des intervalles de temps réguliers des tirs de 10 gouttes de 1 nanolitre à une fréquence de 1000 hertz, dans chacune des cavités de la première ligne de la matrice 131 de la plaque d'échantillons 130.

A chaque tir de la micropipette, le système d'émission/réception de la nappe laser 161, 162 compte les gouttes délivrées.

Lorsque la micropipette 141 arrive en bout de ligne, la plaque d'échantillons 130 change de sens de parcours de sorte que les cavités de la matrice 131 déjà remplies repassent en dessous de la micropipette pour que celle-ci délivre éventuellement des gouttes supplémentaires dans certaines cavités qui comportent moins de 10 gouttes, l'ordre de correction ayant été obtenu grâce au système d'émission/réception de la nappe laser 161, 162 tel que décrit précédemment.

La micropipette 141 ayant effectué un deuxième passage revient alors en se déplaçant selon l'axe Y au niveau de la station automatique de lavage 170 située de son côté, pour être lavée avec de l'eau de javel (par exemple) et remplie de nouveau avec le liquide transporteur. Elle se positionne alors en attente.

La seconde micropipette 142 entre en action lorsque la première micropipette 141 a terminé son second passage au-dessus de la première ligne de la plaque d'échantillons 130.

La micropipette 142 effectue son mouvement de translation selon l'axe Y pendant que la première plaque d'alimentation 110 se déplace selon l'axe X de sorte que la micropipette 142 vienne se positionner au droit de la deuxième cavité de la première plaque d'alimentation 110. Elle se déplace alors selon l'axe Z pour prélever une quantité déterminée de l'ordre de 1 microlitre du composant se trouvant dans cette cavité.

Lorsque la deuxième micropipette 142 est remplie du deuxième composant, elle remonte légèrement selon l'axe Z afin de vérifier son amorçage. Elle se déplace aussi selon l'axe Y pendant que le banc 101 amène selon l'axe X la plaque d'échantillons 130 en dessous de la micropipette 142 de sorte que son orifice se place au droit de la première cavité de la deuxième ligne de la matrice 131, Celle-ci avance sous l'action du moteur, comme décrit précédemment, et la micropipette 142 effectue à intervalles de temps réguliers des tirs de 10 gouttes à une fréquence de 1000 hertz dans chacune des cavités de la deuxième ligne de la matrice 131 de la plaque d'échantillons 130 lors du passage de l'orifice de la micropipette au voisinage du centre de chacune des cavités.

De la même manière, arrivée en bout de ligne, la plaque d'échantillons 130 change de sens de parcours et la matrice repasse en dessous de la micropipette 142 de sorte qu'elle puisse effectuer des corrections de tir dans certaines cavités, l'ordre ayant été obtenu grâce au système d'émission/réception de la nappe laser 161, 162.

Ainsi de suite, en alternance les micropipettes 141, 142 remplissent les cavités en lignes de la matrice 131 de la plaque d'échantillons 132 avec les composants différents contenus dans les réceptacles de la première plaque d'alimentation 110.

Entre chaque cycle de distribution de la plaque d'échantillons, les micropipettes sont lavées dans leur station de lavage 170 et sont remplies du liquide transporteur, leur amorçage ayant été contrôlé grâce au dispositif à faisceau laser correspondant associé à chacune des stations de lavage 170.

Le banc 101 se déplace selon l'axe X pour que le système de dépose et pose de couvercle 180 repose le couvercle sur la plaque d'alimentation 110 et retire le couvercle de la deuxième plaque d'alimentation 120.

Puis vient le remplissage par colonne des cavités 134 de la matrice 131 de la plaque d'échantillons 130, avec les composants contenus dans les réceptacles de la deuxième plaque d'alimentation 120 du dispositif 100.

Les micropipettes 141, 142 fonctionnent également en alternance une colonne sur deux. On décrira alors ci-après seulement le remplissage d'une colonne de la matrice de la plaque d'échantillons.

La micropipette 141 remplie du liquide transporteur adéquate se déplace selon l'axe Y pour se placer au-dessus du banc 101 pendant que la deuxième plaque d'alimentation 120 se déplace selon l'axe X pour venir en dessous de l'orifice de la micropipette de sorte que celle-ci puisse prélever une quantité d'environ 1 microlitre du composant du premier réceptacle de la deuxième plaque d'alimentation. On vérifie l'amorçage comme décrit précédemment.

La micropipette 141 se déplace alors selon l'axe Y pendant que le banc 101 se déplace selon l'axe X de sorte que l'orifice de la micropipette se trouve au-dessus de la première cavité de la première colonne de la matrice 131 de la plaque d'échantillons 132.

La micropipette 141 se déplace alors à vitesse constante d'environ 10 mm/s selon l'axe Y le long de la première colonne de la matrice, le mouvement de la translation de la micropipette étant assuré par un moteur pas à pas ou à courant continu.

La micropipette 141 effectue des tirs à intervalles de temps réguliers de 10 gouttes à une fréquence de 1000 hertz lors du passage de son orifice au voisinage du centre de chacune des cavités de la première colonne de la matrice.

A chaque tir, le système d'émission/réception de la nappe laser 161, 162 contrôle le nombre de gouttes délivrées dans la cavité correspondante.

Arrivée en bout de colonne, la micropipette change de sens de parcours et repasse au-dessus des cavités qu'elle vient de remplir pour effectuer d'éventuelles corrections dont l'ordre a été obtenu grâce au système d'émission/réception de la nappe laser 161, 162.

Puis, la micropipette 141 revient à la station de lavage en se déplaçant selon l'axe Y pour être lavée et remplie de nouveau avec le liquide transporteur avant de se positionner en attente.

La deuxième micropipette 142 entre en action lorsque la première micropipette 141 a terminé son deuxième passage. Elle remplit alors les cavités de la deuxième colonne avec des doses de 10 nanolitres du composant contenu dans le deuxième réceptacle de la deuxième plaque d'alimentation.

Ainsi, on remplit les colonnes et les lignes de la matrice 131 de la plaque d'échantillons 130 avec les différents composants des première et deuxième plaques d'alimentation 110, 120.

Le banc 101 se déplace selon l'axe X pour positionner la deuxième plaque 120 en dessous du système à ventouses 180 afin que celles-ci replacent le couvercle sur ladite plaque.

Enfin, vient le remplissage des cavités 134 de la matrice 131 de la plaque d'échantillons 130 avec le mix PCR se trouvant dans les récipients 151.

Pour ce faire, la méthode de distribution est identique au remplissage des lignes de la matrice tel que décrit précédemment, les deux micropipettes fonctionnant en alternance,

Chaque micropipette 141, 142 venant d'abord au niveau du banc 101 pour prélever une dose du composant se trouvant dans le récipient 151, 152, puis la matrice 131 de la plaque d'échantillons vient en dessous de l'orifice de la micropipette et avance à vitesse constante et à chaque passage du centre d'une cavité, la micropipette délivre 10 gouttes du composant correspondant dans la cavité.

Ainsi, la plaque d'échantillons 130 est totalement remplie avec deux séries de composants différents et un composant commun: une première série de composants provenant de la première plaque d'alimentation correspondant à une série de prélèvements d'ADN, une deuxième série de composants provenant de la deuxième plaque d'alimentation correspondant à une série d'amorces spécifiques de séquences particulières d'ADN, et un troisième composant commun, le mix PCR.

Le volume global de ces trois composants dans chaque cavité 134 de la matrice 131 de la plaque d'échantillons 130, est de l'ordre de 30 nanolitres.

Comme nous l'avons déjà explicité, il est avantageux que la plaque d'échantillons 132 soit disposée sur un système réfrigérant de sorte que la quantité de composant arrivant dans une cavité de la matrice soit refroidie. On limite ainsi les problèmes d'évaporation des quantités très faibles distribuées dans les cavités.

Lorsque la plaque d'échantillons 130 est complètement remplie, elle se déplace selon l'axe X au niveau du système de pose de joint 190, qui descend selon l'axe Z au niveau de la plaque d'échantillons et se déplace selon l'axe Y pendant que la plaque d'échantillons 130 se déplace selon l'axe X, de manière à déposer un joint circulaire sur la plaque d'échantillons 130 autour de la matrice de cavités.

Puis, la plaque d'échantillons remplie portant son joint périphérique se déplace selon l'axe X pour venir se placer en dessous du système 180 de dépose et de pose de couvercles, qui préalablement est allée prendre par ses ventouses un couvercle 133 de la plaque d'échantillons 130, et le maintient au-dessus du banc 101.

Elle reçoit alors le couvercle 133 en verre transparent aux rayons UV sur le joint qu'elle porte.

La plaque d'échantillons 130 est alors prête à subir les traitements ultérieurs pour mettre en oeuvre ici la technique PCR.

Bien entendu, le dispositif 100 selon l'invention permet de remplir la plaque d'échantillons avec toutes sortes de composants en vue de mettre en oeuvre d'autres réactions chimiques ou biologiques en milieu liquide.

Le dispositif 100 selon l'invention présente les avantages suivants.
- Il est entièrement automatisé et permet en un temps très court proche d'une heure, de remplir une plaque d'échantillons comportant 10 000 cavités afin de réaliser 10 000 échantillons différents d'un volume de quelques dizaines de nanolitres.

Ceci est particulièrement avantageux dans le domaine de l'analyse génétique où l'on cherche à limiter les volumes réactionnels utilisés. Le dispositif est aussi particulièrement avantageux dans la mesure où il réalise N x M échantillons réactionnels à partir de N + M prélèvements seulement.
- La plaque d'échantillons telle que décrite selon l'invention, est amovible et réutilisable après lavage.
- Le dispositif 100 permet de réaliser une plaque d'échantillons en toute hygiène ce qui permet d'éviter les contaminations. Un tel dispositif permet également de réaliser en toute sécurité des échantillons réactionnels à partir de composants dangereux.
- Enfin, le dispositif 100 est particulièrement avantageux dans la mesure où il permet de préparer des mélanges réactionnels dans une plaque étanche pouvant ultérieurement (après stockage possible) être envoyée dans un four pour y subir des cycles de température (par exemple pour la mise en oeuvre des réactions de PCR).

Bien entendu, la présente invention n'est nullement limitée au mode de réalisation décrit et représenté, mais l'homme du métier saura y apporter toute variante conforme à son esprit.

En particulier, il peut être prévu que la matrice de la plaque d'échantillons ne soit pas une matrice carrée mais une matrice comportant au moins N lignes correspondant aux N réceptacles remplis de la première plaque d'alimentation remplie et au moins M colonnes correspondant au M réceptacles remplis de la deuxième plaque d'alimentation.

Les première et deuxième plaques d'alimentation peuvent être de simple support de tubes à essai dans la mesure où l'on cherche à stocker une quantité de produit plus importante que celle pouvant être stockée dans les micropuits des plaques du type microplaque.

On peut prévoir que le dispositif selon l'invention comprenne un nombre supérieur à 2 de micropipettes piézoélectriques fonctionnant en alternance synchronisée. Un tel dispositif peut également comprendre un plus grand nombre (supérieur à 2) de plaque d'alimentation, pour préparer une plaque d'échantillons à partir d'un plus grand nombre de séries de composants.

## Revendications

1. Dispositif automatique (100) de réalisation d'une pluralité d'échantillons réactionnels à partir de plusieurs composants pour la mise en oeuvre de réactions chimiques ou biologiques en milieu liquide, notamment le dosage d'au moins un composant ou analyte particulier dans un prélèvement biologique, **caractérisé en ce qu'**il comporte :
- une première plaque d'alimentation (110), notamment une plaque amovible du type microplaque, comportant N réceptacles destinés chacun à contenir un composant,
- une deuxième plaque d'alimentation (120), notamment une plaque amovible du type microplaque, comportant M réceptacles destinés chacun à contenir un composant,
- une plaque d'échantillons (130) amovible, comprenant une pluralité de cavités agencées sous la forme d'une matrice (131) comportant au moins N lignes et au moins M colonnes, chaque cavité présentant un volume de l'ordre de quelques dizaines de nanolitres, et étant destinée à contenir un mélange de composants provenant des première et deuxième plaques d'alimentation (110, 120),
- une micropipette piezoélectrique (141; 142) apte à prélever une quantité déterminée de composant et à délivrer des gouttes de volume de l'ordre du nanolitre,
- des moyens pour déplacer la micropipette piezoéiectrique selon au moins deux axes Y, Z perpendiculaires de sorte qu'elle puisse venir prélever dans chaque réceptacle rempli des première et deuxième plaques d'alimentation (110, 120), la quantité déterminée d'un composant, et
- des moyens de déplacement relatif (101) de la micropipette piezoélectrique (141 ; 142) et de la plaque d'échantillons (130), associés à des moyens de déclenchement de tir de la micropipette (141 ; 142) de manière que cette dernière délivre au moins une goutte de composant dans chaque cavité de la plaque d'échantillons (130).

2. Dispositif selon la revendication 1, **caractérisé en ce que** le déplacement relatif de la micropipette piezoéiectrique (141 ; 142) et de la plaque d'échantillons (130), est continu et les moyens de déclenchement de tir sont aptes à déclencher des tirs de la micropipette à intervalles de temps réguliers en fonction de la vitesse constante de déplacement relatif de ladite micropipette (141 ; 142) et de la plaque d'échantillons (130), indépendamment de la présence ou non d'une cavité de la plaque d'échantillons (130) au droit de ladite micropipette.

3. Dispositif selon l'une des revendications 1 ou 2, **caractérisé en ce que** les moyens de déplacement relatif (110), sont des moyens d'avancement de la plaque d'échantillons (130) selon un axe X parallèle aux lignes de la matrice (131) des cavités, et/ ou selon un axe Y parallèle aux colonnes de la matrice (131) des cavités, la micropipette piezoélectrique (141 ; 142) restant fixe au-dessus de la placue d'échantillons (130) pendant le remplissage desdites cavités.

4. Dispositif selon l'une des revendications 1 ou 2, **caractérisé en ce que** les moyens de déplacement relatif sont des moyens d'avancement de la micropipette selon des axes X et/ou Y parallèles respectivement aux lignes et aux colonnes de la matrice de cavités de la plaque d'échantillons qui reste fixe en dessous de ladite micropipette piezoélectrique, pendant le remplissage desdites cavités.

5. Dispositif selon l'une des revendications 3 ou 4, **caractérisé en ce que** les moyens d'avancement comprennent un moteur pas à pas ou à courant continu, et les moyens de déclenchement de tir comprennent un compteur des pas du moteur apte à envoyer un signal de déclenchement de tir tous les N₁ pas.

6. Dispositif selon l'une des revendications précédentes, **caractérisé en ce que** la micropipette piezoélectrique (141 ; 142) est apte à compter le nombre de gouttes qu'elle délivre et à s'arrêter de tirer au bout d'un nombre déterminé de gouttes délivrées.

7. Dispositif selon l'une des revendications précédentes, **caractérisé en ce qu'**il comporte un plateau réfrigérant supportant la plaque d'échantillons (130).

8. Dispositif selon l'une des revendications précédentes, **caractérisé en ce qu'**il est prévu au moins un système optique (161 ; 162) , tel que l'émission/réception d'une nappe laser, au droit de la plaque d'échantillons (130), apte à compter le nombre de gouttes délivrées à chaque tir de la micropipette piezoélectrique (141 ; 142), et à transmettre ce nombre à un dispositif de coordination pour qu'un ordre de second passage au droit d'une cavité ou plusieurs cavité(s), soit envoyé à la micropipette lors d'un écart constaté entre le nombre de gouttes tirées comptabilisé et le nombre de gouttes théorique prévu.

9. Dispositif selon l'une des revendications précédentes, **caractérisé en ce qu'**il comporte une autre micropipette piezoélectrique (142) identique à la première (141), les deux micropipettes (141 ; 142) fonctionnant en alternance.

10. Dispositif selon l'une'des revendications précédentes, **caractérisé en ce qu'**il comporte une station automatique de lavage (170) associée à chaque micropipette piezoélectrique (141 ; 142) assurant la décontamination de celle-ci.

11. Dispositif selon la revendication 10, **caractérisé en ce que** chaque station de lavage (170) comporte des moyens de remplissage de la micropipette piezoélectrique (141 ; 142) avec un liquide transporteur non mixible à l'eau et des moyens optiques (171) de vérification du bon remplissage de ladite micropipette (141 ; 142).

12. Dispositif selon l'une des revendications précédentes, **caractérisé en ce que** chaque micropipette piézoélectrique (141; 142) comporte deux parties conductrices séparées par un matériau non conducteur, reliées en partie supérieure à un système électrique, de sorte que lorsque l'orifice de la micropipette piezoélectrique entre en contact avec un composant d'un réceptacle de la première ou de la deuxième plaque d'alimentation, il se produit une fermeture du circuit électrique formé par les deux parties conductrices reliées électriquement de ladite micropipette, qui commande l'arrêt du déplacement vertical de la micropipette.

13. Dispositif selon l'une des revendications précédentes, **caractérisé en ce qu'**il est prévu un moyen automatique (190) de dépose d'un joint sur la plaque d'échantillons (130).

14. Dispositif selon l'une des revendications précédentes, **caractérisé en ce qu'**il est prévu un moyen automatique à ventouses (180) de dépose et de pose de couvercles sur les première et deuxième plaques d'alimentation (110, 120) ainsi que sur la plaque d'échantillons (130) remplie.

15. Dispositif selon l'une des revendications précédentes, **caractérisé en ce que** les première et deuxième plaques d'alimentation (110, 120) sont disposées selon l'axe X de part et d'autre de la plaque d'échantillons (130), l'ensemble desdites plaques (110, 120, 130) étant porté par un banc (110) mobile selon ledit axe X.

16. Dispositif selon l'une quelconque des revendications précédentes, **caractérisé en ce que** la matrice (131) de cavités de la plaque d'échantillons (130) est une matrice carrée avec N égal à M.

17. Dispositif selon la revendication 16, **caractérisé en ce que** ladite matrice (131) présente une largeur d'environ 5 cm, et **en ce qu'**elle comporte 100 colonnes et 100 lignes avec des cavités de largeur (d₁) égale à environ 400 µm, et de profondeur égale à environ 400-500 µm, deux cavités successives sur une ligne étant espacées d'une distance (d₂) égale à environ 150 µm.

18. Dispositif selon l'une quelconque des revendications précédentes, **caractérisé en ce qu'**il comporte d'autres récipients (151, 152) de composants différents disposés à proximité de la plaque d'échantillons (130).

## Patentansprüche

1. Automatische Vorrichtung (100) zur Erzeugung einer Mehrzahl von reaktionsfähigen Proben ausgehend von mehreren Komponenten zur Durchführung chemischer oder biologischer Reaktionen im flüssigen Milieu, insbesondere zur Dosierung von wenigstens einer bestimmten Komponente oder eines Analyten in einer biologischen Entnahme, **dadurch gekennzeichnet, daß** sie umfaßt:
- eine erste Versorgungsplatte (110), insbesondere eine abnehmbare Platte vom Mikroplattentyp, welche N Behälter umfaßt, die dazu bestimmt sind, jeder eine Komponente zu enthalten,
- eine zweite Versorgungsplatte (120), insbesondere eine abnehmbare Platte vom Mikroplattentyp, welche M Behälter umfaßt, die dazu bestimmt sind, jeder eine Komponente zu enthalten,
- eine abnehmbare Probenplatte (130), welche eine Mehrzahl von in Form einer Matrize (131) angeordneten Hohlräumen umfaßt, die wenigstens N Zeilen und wenigstens M Spalten aufweist, wobei jeder Hohlraum ein Volumen in der Größenordnung von ein paarmal 10 Nanolitern aufweist und dazu bestimmt ist, eine Mischung von aus der ersten und der zweiten Versorgungsplatte (110,120) stammenden Komponenten zu enthalten,
- eine piezoelektrische Mikropipette (141;142), welche dazu geeignet ist, eine bestimmte Menge von Komponente zu entnehmen und Tropfen von einem Volumen in der Größenordnung von Nanolitern abzugeben,
- Mittel zum Verschieben der piezoelektrischen Mikropipette entlang von wenigstens zwei zueinander senkrechten Achsen Y, Z, so daß diese aus jedem gefüllten Behälter der ersten und der zweiten Versorgungsplatte (110,120) die bestimmte Menge einer Komponente entnehmen kann, und
- Mittel zur relativen Verschiebung (101) der piezoelektrischen Mikropipette (141;142) und der Probenplatte (130), die zu Mitteln zum Auslösen eines Schusses der Mikropipette (141;142) gehören, derart daß die Mikropipette wenigstens einen Tropfen von Komponente in jeden Hohlraum der Probenplatte (130) abgibt.

2. Vorrichtung nach Anspruch 1, **dadurch gekennzeichnet, daß** die relative Verschiebung der piezoelektrischen Mikropipette (141;142) und der Probenplatte (130) kontinuierlich ist und die Mittel zum Auslösen von Schüssen dazu geeignet sind, Schüsse der Mikropipette in regelmäßigen Zeitintervallen als Funktion der konstanten relativen Verschiebungsgeschwindigkeit zwischen der Mikropipette (141;142) und der Probenplatte (130) auszulösen, unabhängig von der An- oder Abwesenheit eines Hohlraums der Probenplatte (130) geradlinig zu der Mikropipette.

3. Vorrichtung nach einem der Ansprüche 1 oder 2, **dadurch gekennzeichnet, daß** die Mittel zur relativen Verschiebung (110) Mittel zum Vorschub der Probenplatte (130) auf einer Achse X parallel zu den Zeilen der Matrix (131) der Hohlräume und/oder entlang einer Achse Y parallel zu den Spalten der Matrix (131) der Hohlräume sind, wobei die piezoelektrische Mikropipette (141;142) während des Füllens der Hohlräume ortsfest über der Probenplatte (130) bleibt.

4. Vorrichtunng nach einem der Ansprüche 1 oder 2, **dadurch gekennzeichnet, daß** die Mittel zur relativen Verschiebung Mittel zum Vorschub der Mikropipette entlang der Achse X und/oder der Achse Y sind, die parallel zu den Zeilen bzw. den Spalten der Matrix der Hohlräume der Probenplatte sind, welche während des Füllens der Hohlräume ortsfest unter der piezoelektrischen Mikropipette bleibt.

5. Vorrichtung nach einem der Ansprüche 3 oder 4, **dadurch gekennzeichnet, daß** die Mittel zum Vorschub einen Schrittmotor oder einen Gleichstrommotor umfassen, und die Mittel zum Auslösen des Schusses einen Zähler der Schritte des Motors umfassen, der dazu geeignet ist, alle N₁ Schritte ein Signal zum Auslösen eines Schusses abzuschicken.

6. Vorrichtung nach einem der vorhergehenden Ansprüche, **dadurch gekennzeichnet, daß** die piezoelektrische Mikropipette (141;142) dazu geeignet ist, die Anzahl von Tropfen, die sie abgibt, zu zählen, und nach einer bestimmten Anzahl von abgegebenen Tropfen aufzuhören zu schießen.

7. Vorrichtung nach einem der vorhergehenden Ansprüche, **dadurch gekennzeichnet, daß** sie eine Kühlplatte aufweist, welche die Probenplatte (130) trägt.

8. Vorrichtung nach einem der vorhergehenden Ansprüche, **dadurch gekennzeichnet, daß** wenigstens ein optisches System (161;162) vorgesehen ist, wie z.B. die Emission/Rezeption eines Laserbündels längs der Probenplatte (130), wobei das System dazu geeignet ist, die Anzahl der bei jedem Schuß der piezoelektrischen Mikropipette (141;142) abgegebenen Tropfen zu zählen und diese Zahl an eine Koordinationsvorrichtung zu übermitteln, damit bei einer festgestellten Abweichung zwischen der Anzahl der gezählten gezogenen Tropfen und der Anzahl der theoretisch vorgesehenen Tropfen ein Befehl eines zweiten Durchgangs längs eines Hohlraums oder mehrere Hohlräume an die Mikropipette geschickt wird.

9. Vorrichtung nach einem der vorhergehenden Ansprüche, **dadurch gekennzeichnet, daß** sie eine zu der ersten Mikropipette (141)identische andere piezoelektrische Mikropipette (142) umfaßt, wobei die beiden Mikropipetten (141;142) alternierend in Betrieb sind.

10. Vorrichtung nach einem der vorhergehenden Ansprüche, **dadurch gekennzeichnet, daß** sie eine zu jeder piezoelektrischen Mikropipette (141;142) gehörige automatische Waschstation (170) umfaßt, die die Reinigung derselben sicherstellt.

11. Vorrichtung nach Anspruch 10, **dadurch gekennzeichnet, daß** jede Waschstation (170) Mittel zum Füllen der piezoelektrischen Mikropipette (141;142) mit einer nicht mit Wasser mischbaren Transportflüssigkeit und optische Mittel (171) zur Verifikation, daß die Mikropipette (141;142) gut gefüllt ist, aufweist.

12. Vorrichtung nach einem der vorhergehenden Ansprüche, **dadurch gekennzeichnet, daß** jede piezoelektrische Mikropipette (141;142) zwei leitende Teile umfaßt, die durch ein nicht-leitendes Material voneinander getrennt sind und am oberen Teil an ein elektrisches System angeschlossen sind, so daß, wenn die Öffnung der piezoelektrischen Mikropipette in Kontakt mit einer Komponente eines Behälters der ersten oder der zweiten Versorgungsplatte ist, ein von den beiden elektrisch verbundenen leitenden Teilen der Mikropipette gebildeter Stromkreis geschlossen wird, was einen Stopp der vertikalen Verschiebung der Mikropipette bewirkt.

13. Vorrichtung nach einem der vorhergehenden Ansprüche, **dadurch gekennzeichnet, daß** ein automatisches Mittel (190) zum Absetzen einer Dichtung auf der Probenplatte (130) vorgesehen ist.

14. Vorrichtung nach einem der vorstehenden Ansprüche, **dadurch gekennzeichnet, daß** ein automatisches Mittel mit Saugnäpfen oder Luftansauglöchern (moyens automatique ä ventouses, 180) "zum Absetzen und Aufsetzen von Abdeckungen auf die erste und die zweite Versorgungsplatte (110,120), als auch auf die gefüllte Probenplatte (130) vorgesehen ist.

15. Vorrichtung nach einem der vorhergehenden Ansprüche, **dadurch gekennzeichnet, daß** die erste und die zweite Versorgungsplatte (110,120) beidseitig der Probenplatte (130) auf der Achse X angeordnet sind, wobei die Plattenkonstruktion (110,120,130) von einer entlang der Achse X beweglichen Bank (110) getragen wird.

16. Vorrichtung nach einem der vorhergehenden Ansprüche, **dadurch gekennzeichnet, daß** die Matrix (131) der Hohlräume der Probenplatte (130) eine quadratische Matrix mit N gleich M ist.

17. Vorrichtung nach Anspruch 16, **dadurch gekennzeichnet, daß** die Matrix (131) eine Größe von etwa 5 cm aufweist und daß sie 100 Spalten und 100 Zeilen von Hohlräumen mit einer Breite (d₁) von etwa 400 µm und einer Tiefe von etwa 400-500 µm umfaßt, wobei zwei in einer Zeile aufeinanderfolgende Hohlräume in einem Abstand (d₂) von etwa 150 µm voneinander beabstandet sind.

18. Vorrichtung nach einem der vorhergehenden Ansprüche, **dadurch gekennzeichnet, daß** sie weitere Behälter (151,152) für verschiedene Komponenten umfaßt, die in der Nähe der Probenplatte (130) angeordnet sind.

## Claims

1. Automatic device (100) for producing a plurality of reaction samples from several constituents for implementing chemical or biological reactions in liquid medium, in particular the dosing of at least one particular constituent or analyte in a biological specimen, **characterized in that** it comprises:
- a first supply plate (110), in particular a removable plate of the microplate type, comprising N receptacles each intended to contain a constituent,
- a second supply plate (120), in particular a removable plate of the microplate type, comprising M receptacles each intended to contain a constituent,
- a removable plate for samples (130), comprising a plurality of cavities arranged in the form. of an array (131) comprising at least N rows and at least M columns, each cavity exhibiting a volume of the order of a few tens of nanolitres, and being intended to contain a mixture of constituents originating from the first and second supply plates (110, 120),
- a piezoelectric micropipette (141; 142) able to sample a determined amount of constituent and to deliver drops of volume of the order of a nanolitre,
- means for displacing the piezoelectric micropipette along at least two perpendicular axes Y, Z so that it can sample, from each filled receptacle of the first and second supply plates (110, 120), the determined amount of a constituent, and
- means of relative displacement (101) of the piezoelectric micropipette (141; 142) and of the sample plate (130), which are associated with means for triggering discharge of the micropipette (141; 142) in such a way that the latter delivers at least one drop of constituent into each cavity of the sample plate (130).

2. Device according to Claim 1, **characterized in that** the relative displacement of the piezoelectric micropipette (141; 142) and of the sample plate (130) is continuous and the discharge triggering means are able to trigger discharges of the micropipette at regular time intervals as a function of the constant speed of relative displacement of the said micropipette (141; 142) and of the sample plate (130), independently of the presence or otherwise of a cavity of the sample plate (130) in line with the said micropipette.

3. Device according to one of Claims 1 and 2, **characterized in that** the means of relative displacement (110) are means for advancing the sample plate (130) along an axis X parallel to the rows of the array (131) of. cavities, and/or along an axis Y parallel to the columns of the array (131) of cavities, the piezoelectric micropipette (141; 142) remaining stationary above the sample plate (130) during the filling of the said cavities.

4. Device according to one of Claims 1 and 2, **characterized in that** the means of relative displacement are means for advancing the micropipette along axes X and/or Y which are respectively parallel to the rows and to the columns of the array of cavities of the sample plate which remains stationary beneath the said piezoelectric micropipette, during the filling of the said cavities.

5. Device according to one of Claims 3 and 4, **characterized in that** the advancing means comprise a stepper or DC motor, and the discharge triggering means comprise a counter of the steps of the motor able to send a discharge triggering signal every N₁ steps.

6. Device according to one of the preceding claims, **characterized in that** the piezoelectric micropipette (141; 142) is able to count the number of drops which it delivers and to stop discharging after a determined number of drops delivered.

7. Device according to one of the preceding claims, **characterized in that** it comprises a refrigerating tray supporting the sample plate (130).

8. Device according to one of the preceding claims, **characterized in that** there is provided at least one optical system (161; 162) such as the emission/reception of a laser carpet, in line with the sample plate (130), able to count the number of drops delivered with each discharge of the piezoelectric micropipette (141; 142), and to transmit this number to a coordination device so that an order for a second pass in line with a cavity or several cavities is sent to the micropipette when a discrepancy is noted between the counted number of drops discharged and the designated theoretical number of drops.

9. Device according to one of the preceding claims, **characterized in that** it comprises another piezoelectric micropipette (142) identical to the first (141), the two micropipettes (141; 142) operating alternately.

10. Device according to one of the preceding claims, **characterized in that** it comprises an automatic washing station (170) associated with each piezoelectric micropipette (141; 142) ensuring the decontamination of the latter.

11. Device according to Claim 10, **characterized in that** each washing station (170) comprises means for filling the piezoelectric micropipette (141; 142) with a water-immiscible carrier liquid and optical means (171) for verifying the proper filling of the said micropipette (141; 142).

12. Device according to one of the preceding claims, **characterized in that** each piezoelectric micropipette (141; 142) comprises two conducting parts, separated by a non-conducting material, which are linked at the upper part to an electrical system, so that when the orifice of the piezoelectric micropipette comes into contact with a constituent of a receptacle of the first or of the second supply plate, it brings about closure of the electrical circuit formed by the two electrically linked conducting parts of the said micropipette, which commands the stoppage of the vertical displacement of the micropipette.

13. Device according to one of the preceding claims, **characterized in that** there is provided an automatic means (190) for fitting a seal on the sample plate (130).

14. Device according to one of the preceding claims, **characterized in that** there is provided an automatic means with suckers (180) for removing and for fitting covers on the first and second supply plates (110, 120) as well as on the filled sample plate (130).

15. Device according to one of the preceding claims, **characterized in that** the first and second supply plates (110, 120) are disposed along the X axis on either side of the supply plate (130), the said plates (110, 120, 130) together being carried by a movable bench (110) along the said X axis.

16. Device according to any one of the preceding claims, **characterized in that** the array (131) of cavities of the sample plate (130) is a square array with N equal to M.

17. Device according to Claim 16, **characterized in that** the said array (131) exhibits a width of around. 5 cm, and **in that** it comprises 100 columns and 100 rows with cavities of width (d₁) equal to around 400 µm and of depth equal to around 400-500 µm, two successive cavities in one row being spaced apart by a distance (d₂) equal to around 150 µm.

18. Device according to any one of the preceding claims, **characterized in that** it comprises other vessels (151, 152) of different constituents disposed in proximity to the sample plate (130).
